(19) Europäisches Patentamt
European Patent Office
Office européen des brevets

(11) **EP 1 539 868 B1**

(12) **EUROPEAN PATENT SPECIFICATION**

(45) Date of publication and mention
of the grant of the patent:
**14.04.2010 Bulletin 2010/15**

(51) Int Cl.:
***C08J 9/00*** (2006.01)

(21) Application number: **03793299.3**

(86) International application number:
**PCT/US2003/026361**

(22) Date of filing: **22.08.2003**

(87) International publication number:
**WO 2004/018551 (04.03.2004 Gazette 2004/10)**

(54) **THERMOPLASTIC ELASTOMERIC FOAM MATERIALS AND METHODS OF FORMING THE SAME**

THERMOPLASTISCHE ELASTOMERE SCHAUMSTOFFMATERIALIEN UND HERSTELLUNGSVERFAHREN DAFÜR

MATERIAUX ALVEOLAIRES THERMOPLASTIQUES ELASTOMERES ET LEURS PROCEDES DE FABRICATION

(84) Designated Contracting States:
**AT BE BG CH CY CZ DE DK EE ES FI FR GB GR HU IE IT LI LU MC NL PT RO SE SI SK TR**

(30) Priority: **22.08.2002 US 225069**

(43) Date of publication of application:
**15.06.2005 Bulletin 2005/24**

(73) Proprietor: **Trexel, Inc.**
**Woburn, MA 01801 (US)**

(72) Inventors:
• ANDERSON, Jere, R.
  **Newburyport, MA 01950 (US)**
• BLIZARD, Kent, G.
  **Ashland, MA 01721 (US)**
• CHEN, Liqin
  **West Roxbury, MA 02132 (US)**
• OKAMOTO, Kelvin, T.
  **Illinois 60005 (US)**

(74) Representative: **HOFFMANN EITLE**
**Patent- und Rechtsanwälte**
**Arabellastrasse 4**
**81925 München (DE)**

(56) References cited:
**WO-A-99/47573     US-A- 5 654 346**

**Description**

Field of Invention

The present invention relates generally to a method of forming polymeric foams.

Background of Invention

Polymeric foam materials are well known, and typically are produced by introducing a physical blowing agent into a molten polymeric stream, mixing the blowing agent with the polymer, and extruding the mixture into the atmosphere while shaping the mixture. Exposure to atmospheric conditions causes the blowing agent to gasify, thereby forming cells in the polymer. Under some conditions the cells can be made to remain isolated, and a closed-cell foamed material results. Under other, typically more violent foaming conditions, the cells rupture or become interconnected and an open-cell material results. As an alternative to a physical blowing agent, a chemical blowing agent (CBA) can be used which undergoes chemical decomposition in the polymer material causing formation of a gas. Microcellular foam materials are a class of foam materials that are characterized by having small cell sizes and high cell densities.

U.S. Patent No. 3,796,779 (Greenberg; March 12, 1976) describes injection of a gas into a flowing stream of molten plastic, and expansion to produce a foam. The described technique typically produces voids or cells within the plastic that are relatively large. The number of voids or cells per unit volume of material typically is relatively low according to that technique and often the material exhibits a non-uniform distribution of cells throughout the material.

U.S. Patent No. 4,473,665 (Martini-Vvedensky, et al.; September 25, 1984) describes a process for making foamed polymer having cells less than about 100 microns in diameter. In the technique of Martini-Vvedensky, et al., a material precursor is saturated with a blowing agent, the material is placed under high pressure, and the pressure is rapidly dropped to nucleate the blowing agent and to allow the formation of cells. The material then is frozen rapidly to maintain a desired distribution of microcells.

U.S. Patent No. 5,158,986 (Cha, et al.; October 27, 1992) describes formation of microcellular polymeric material using a supercritical fluid as a blowing agent. In a batch process of Cha, et al., a plastic article is submerged at pressure in supercritical fluid for a period of time, and then quickly returned to ambient conditions creating a solubility change and nucleation. In a continuous process, a polymeric sheet is extruded, then run through rollers in a container of supercritical fluid at high pressure, and then exposed quickly to ambient conditions. In another continuous process, a supercritical fluid-saturated molten polymeric stream is established. The stream is rapidly heated, and the resulting thermodynamic instability (solubility change) creates sites of nucleation, while the system is maintained under pressure preventing significant growth of cells. The material then is injected into a mold cavity where pressure is reduced and cells are allowed to grow.

Polymeric foam materials may be used in a number of different applications including gaskets, shoe soles and other energy absorbing impact structures. In particular, thermoplastic elastomers (TPEs) have been used in these applications because of their energy absorption properties, as well as their processibility. TPEs have a hard thermoplastic phase and a soft elastomeric phase, thus, giving TPEs properties that fall between cured rubbers and soft plastics. TPEs may also contain mineral oil and/or particulate fillers, which act as processing aids and extenders, and enhance the rubber-like properties of the TPE.

In some applications, such as certain gasket applications, it would be desirable for the polymeric material to exhibit low levels of water absorption. However, TPE foams, and especially low density TPE foams, may absorb water and, thus, may have limited use in these applications.

Typical prior art TPE foams may absorb water as a result of an inherent open cell structure. The open cell structure can result from a number of factors. First, where a TPE includes viscosity reducers such as mineral oils, the viscosity reduction results in low extrusion pressures and insufficient melt strengths to resist cell expansion and maintain a closed cell structure at the exit of the die. Secondly, low molecular-level adhesion between the differing material phases in typical TPEs results in areas of stress concentration that tend to reduce the melt strength of the material below that required to maintain a closed cell structure. Finally, during the foaming process, particulate agglomerates and areas of low molecular-level adhesion can cause cell rupture and lead to formation of large, connected cellular structures, particularly at lower foam densities.

An open cell structure at the surface of and throughout a foam material can create pathways that enable water, under the appropriate driving force such as capillary action or pressure differences, to be absorbed. The total amount of water absorbed depends on the amount of connection between the cells and the volume of cells in the structure.

To reduce water absorption, in some cases conventional TPE foams have been co-extruded with a solid skin layer and/or have been coated with a hydrophobic chemical coating layer. However, co-extruded and coated products are expensive to produce. In other techniques, water absorption has been reduced by increasing the melt tension of the TPE by adding a melt strength enhancing additive (e.g., a fluorinated polymer such as acrylic-modified PTFE) to the TPE composition. However, adding such additives also increases production costs and may complicate processing.

Summary of Invention

The invention provides methods of preparing thermoplastic elastomeric foam materials. The TPE foams thus produced have a low water absorption.

In one aspect, the invention provides a series of foam articles. In one embodiment, a foam article is provided which comprises a thermoplastic elastomer having a complete submersion water absorption of less than or equal to 40 x [(1- A)/A], wherein A= foam density in grams/cubic centimeter (g/cc). The foam article is substantially free of a melt strength enhancing additive containing fluorine.

In another embodiment, a foam article is provided which comprises a thermoplastic elastomer having a complete submersion water absorption of less than or equal to 40 x [(1-A)/A], wherein A= foam density in grams/cubic centimeter. The thermoplastic elastomer includes a thermoplastic phase comprising a first polymer type. The foam article is substantially free of a melt strength enhancing additive of a different polymer type than the first polymer type.

In another embodiment, a foam article is provided which comprises a thermoplastic elastomer having a complete submersion water absorption of less than or equal to 40 x [(1-A)/A], wherein A= foam density in grams/cubic centimeter. The foam article is substantially free of a melt strength enhancing additive containing fluorine and is free of an auxiliary layer formed on a surface of the foam article that limits water absorption.

In another embodiment, a foam article is provided that comprises a thermoplastic elastomer having a complete submersion water absorption of less than or equal to 40 x [(1-A)/A], wherein A= foam density in grams/cubic centimeter. The thermoplastic elastomer includes a thermoplastic phase comprising a first polymer type. The foam article is substantially free of a melt strength enhancing additive comprising a different polymer type than the first polymer type and is free of an auxiliary layer formed on a surface of the foam article that limits water absorption.

In another embodiment, a foam article is provided that comprises a thermoplastic elastomer having a U-test water absorption of less than or equal to 0.5%. The foam article is substantially free of a melt strength enhancing additive comprising fluorine and is free of an auxiliary layer formed on a surface of the foam article that limits water absorption.

In another embodiment, a foam article is provided that comprises a thermoplastic elastomer having a U-test water absorption of less than or equal to 0.5%. The thermoplastic elastomer includes a thermoplastic phase comprising a first polymer type. The foam article is substantially free of a melt strength enhancing additive comprising a different polymer type than the first polymer type and is free of an auxiliary layer formed on a surface of the foam article that limits water absorption.

In another aspect, the invention provides a series of methods. In one embodiment, a method is provided that comprises processing polymeric material comprising a thermoplastic elastomer in an extruder; and introducing a blowing agent comprising nitrogen into the polymeric material in the extruder.

In another embodiment, a method is provided that comprises extruding a thermoplastic elastomer foam material from polymer extrusion apparatus using a blowing agent that is a gas under ambient conditions and obtaining material having a complete submersion water absorption of less than or equal to 40 x [(1- A)/A], wherein A= foam density in grams/cubic centimeter.

In another aspect, a method is provided that comprises processing a thermoplastic elastomer having a durometer of less than 60 Shore A in an extruder, and introducing a physical blowing agent into the polymeric material to form a mixture of physical blowing agent and polymeric material in the extruder. The method further comprises extruding the mixture of physical blowing agent and polymeric material to form an extrudate; and forming a gasket, seal or weatherstrip from the extrudate.

In another aspect, a method is provided that comprises extruding a thermoplastic elastomer foam material from polymer extrusion apparatus, and recovering a foam article comprising the thermoplastic elastomer having a U-test water absorption of less than or equal to 0.5%. The foam article is substantially free of a melt strength enhancing additive comprising fluorine and is free of an auxiliary layer formed on a surface of the foam article that limits water absorption.

In another aspect, a method is provided that comprises extruding a thermoplastic elastomer foam material from polymer extrusion apparatus, and recovering a foam article comprising the thermoplastic elastomer having a U-test water absorption of less than or equal to 0.5%. The thermoplastic elastomer includes a thermoplastic phase comprising a first polymer type. The foam article is substantially free of a melt strength enhancing additive comprising a different polymer type than the first polymer type and is free of an auxiliary layer formed on a surface of the foam article that limits water absorption.

The subject matter of this application may involve, in some cases, interrelated products, alternative solutions to a particular problem, and/or a plurality of different uses of a single system or article. Other advantages, features, and uses of the invention will become apparent from the following detailed description of non-limiting embodiments of the invention when considered in conjunction with the accompanying drawings, which are schematic and which are not intended to be drawn to scale. In the figures, each identical or nearly identical component that is illustrated in various figures typically is represented by a single numeral. For purposes of clarity, not every component is labeled in every figure, nor is every component of each embodiment of the invention shown where illustration is not necessary to allow those of ordinary skill in the art to understand the invention. In cases where the present specification and a document incorporated by reference include conflicting disclosure, the present specification shall control.

Brief Description of the Drawings

Fig. 1 is a schematic illustration of an extrusion system.
Fig. 2 is a schematic illustration of a multihole blowing agent feed orifice arrangement and extrusion screw.
Fig. 3 is a schematic illustration of an extrusion system set up for profile extrusion.
Fig. 4 is a graph of water absorption as a function of foam density at different water absorption factors.

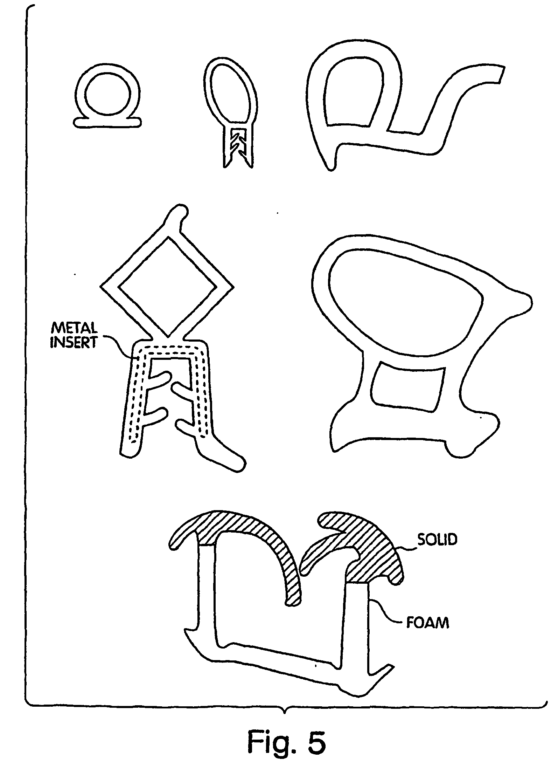

Fig. 5 shows examples of automotive gasket profiles.
Fig. 6 shows test equipment used to measure water absorption in the Examples.
Fig. 7 is a graph of the water absorption as a function of foam density for foams made with nitrogen blowing agent as described in the Examples.
Fig. 9B is a copy of a scanning electron micrographs of a TPV sample foamed using a nitrogen blowing agent.

Detailed Description

The following documents are incorporated herein by reference in their entirety for all purposes:

International Patent Publication No. WO 98/08667, published March 5, 1998, entitled "Method and Apparatus for Microcellular Polymer Extrusion", by Burnham, et al.;
International Patent Publication No. WO 99/32544, published July 1, 1999, entitled "Microcellular Foam Extrusion/ Blow Molding Process and Article Made Thereby", by Anderson, et al.; and
International Patent Publication No. WO 00/26005, published May 11, 2000, entitled "Molded Polymeric Material Including Microcellular, Injection-Molded, and Low-Density Polymeric Material", by Pierick, et aL

The present invention provides a series of techniques and articles involving polymeric foams. In one aspect, the invention involves the discovery that unexpectedly low water absorption characteristics can be achieved in polymer foams by tailoring foam-forming conditions as described below. Particularly surprising is the achievement of low water absorption in extruded thermoplastic elastomeric (TPE) polymer foams, in view of the fact that conventional TPEs foams typically have open cell structures which leads to unacceptably high water absorption.

"Complete submersion water absorption," in the context of the present invention, is measured by completely immersing an entire sample in water under high vacuum, for example according to ASTM D 1056 Sections 42 through 48. The sample is weighed before and after immersion. The water absorption is defined by the percentage increase in weight of the sample. For the water absorptions described herein, the entire sample is immersed in water including ends of the sample. The technique used herein is to be distinguished from techniques that do not completely immerse the entire sample such as the U-test water absorption described below which allows sample ends to remain out of the water. Such techniques that allow sample ends to remain out of the water have a tendency to have lower water absorption values (in particular, for open cell foams) because the technique does not account for water that would be absorbed into the cell structure via the sample ends (lower values may be compounded, for example, when surfaces of the article, which are selectively submerged, have been treated with a hydrophobic substance).

"U-test water absorption," in the context of the present invention, is measured by immersing a sample under water in a "U" shape with sample ends remaining out of the water as described generally in test specifications of North American OEMs (e.g. Ford WSB-M2D189-A and Chrysler MS-AK87). The sample is weighed before and after immersion and the U-test water absorption is calculated from the respective weights. The specific procedure for measuring "U-test water absorption," as used herein, includes minor modifications of the above-noted test specifications which do not effect the results. The total sample length is 250 mm, with 25 mm remaining out of the water on each end. A vacuum of 17 kPa absolute is maintained for 5 minutes, followed by 5 minutes at atmospheric pressure. The U-test water absorption is calculated as follows:

$$WA\ (\%) = [(W_f - W_i)/W_i]/0.8 \times 100\%$$

where $W_f$ and $W_i$ are the final and initial weights, respectively and the 0.8 factor represents the proportion of the sample that is submerged in the water.

It has been found that foams of the present invention may exhibit low water absorption properties characterized by low complete submersion water absorptions and/or low U-test water absorptions. It should be understood that "water absorption," as used herein, may refer to both "complete submersion water absorption" and "U-test water absorption."

It has been found that foams of the present invention have lower complete submersion water absorptions than conventional foams at a given foam density or over a given foam density range. The specific complete submersion water absorption depends on a number of factors including processing conditions, polymeric material composition, and polymeric foam density. Process conditions may be adjusted to provide the desired water absorption value. It has been generally observed that complete submersion water absorption increases with decreasing foam density. A mathematical relationship between density and complete submersion water absorption may be useful for comparing the complete submersion water absorption of polymeric foams of the present invention to prior art foams. Specifically, foams of the invention have a complete submersion water absorption that is less than or equal to the following:

$$C \times [(1- A)/A]$$

wherein A= foam density in grams/cubic centimeter and C is a water absorption factor.

In some embodiments, the polymeric foams of the present invention have a complete submersion water absorption of less than or equal to $50 \times [(1- A)/A]$ (i.e., C = 50). In some embodiments, the polymeric foams of the present invention have a complete submersion water absorption of less than or equal to $40 \times [(1- A)/A]$ (i.e., C = 40). In other embodiments, polymeric foams have a complete submersion water absorption of less than or equal to $25 \times [(1- A)/A]$ (i.e., C = 25); in other embodiments, less than or equal to $10 \times [(1- A)/A]$ (i.e., C = 10); and, in other embodiments, less than or equal to $5 \times [(1- A)/A]$ (i.e., C = 5).

In some embodiments, the polymeric foams of the present invention have low U-test water absorptions of less than or equal to 0.5%. In some embodiments, the polymeric foams have even lower U-test water absorptions such as less than or equal to 0.3%, 0.1%, or even less than 0.05%. In some cases, the U-test water absorption is between 0.01% and 0.5%. The specific U-test water absorption depends on a number of factors including processing conditions, polymeric material composition, and polymeric foam density. Process conditions may be adjusted to provide the desired water absorption value.

In contrast to the relationship between complete submersion water absorption and density described above, the U-test water absorption does not generally depend on density. This is, in part, because U-test water absorption does not generally depend on the degree of open-cell structure of a foam (which generally increase at higher densities) since ends of the foam are not immersed in water in this test. The U-test water absorption is more dependent on the amount of surface porosity (which does not depend strongly on density), as described further below. Therefore, a relationship between U-test water absorption and density has not been provided.

In contrast to foams of the present invention, prior art foams of which the inventors are aware that are not treated with a separate component that decreases water absorption, as described further below, have complete submersion water absorptions greater than or equal to $50 \times [(1- A)/A]$ (i.e., C = 50). Prior art foams of which the inventors are aware that are not treated with a separate component that decreases water absorption, as described further below, have U-test water absorption values of greater than or equal to 0.7%.

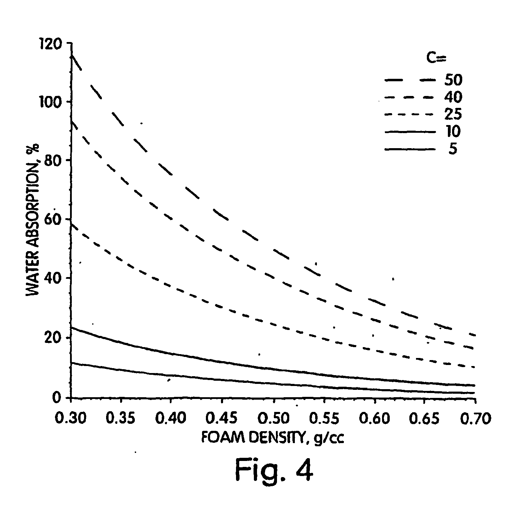

Fig. 4 graphically illustrates the relationship of foam density and complete submersion water absorption at the above-described C values.

It should be understood that prior art foams that include a separate component that reduces water absorption may have low water absorptions Such separate components may be co-extruded solid layers formed on foam article surfaces or hydrophobic coating layers formed on foam article surfaces. The separate component may also be an additive that is added to the base polymeric material to increase its melt strength (melt-strength additives are well known). In some embodiments, the melt strength enhancing additive may contain fluorine (e.g., an acrylic-modified fluorinated polymer or PTFE). In other cases, the melt strength enhancing additive may comprise a different polymer type than the polymer type of one component of the base polymer (e.g., the thermoplastic phase of TPE). Typically, melt strength additives are present in amounts of less than 5 percent of the total weight of the base polymeric material.

Advantageously, foams of the present invention may achieve low water absorptions without the need for using separate components noted above. Thus, in some embodiments, foams of the present invention are substantially free of a melt strength enhancing additive. In one embodiment, the foams are substantially free of a melt strength additive that comprises a different polymer type than the polymer type of one component of the base polymer. "Base polymer", as used herein means the continuous phase of a blend (e.g., the thermoplastic phase of TPE), or primary polymer component of a plastic. As used herein, a second polymer (e.g. additive) that is of a "different polymer type" relative to a first polymer (e.g. base polymer) includes a different, non-hydrocarbon atom or group of atoms relative to the first polymer. For example, the second, different polymer type might be halogenated, i.e., including the non-hydrocarbon atom chorine, or may include a non-hydrocarbon group such as an ester, ether, amide, amine, etc., not present in the first polymer. For example, polyesters are a polymer type that includes PET, PBT, and PCT (amongst others), all of which have an ester functional group and polyolefins are a polymer type that includes polypropylene and polyethylene, all of which have no functional groups. In another embodiment, the foams are substantially free of a melt strength enhancing additive that contains fluorine (e.g., an acrylic-modified fluorinated polymer or PTFE). In another embodiment, the foams are substantially free of a melt strength enhancing additive that includes a polymer having a backbone chemically different than the backbone of the base component (i.e., a backbone defined by different atoms at at least some locations).

It should be understood that, as used herein, melt strength enhancing additives do not include additives that comprise the same polymer type as the polymer type of one component of the base polymer (e.g., the thermoplastic phase of TPE). For example, an additive that comprises polypropylene is not a melt strength additive, as defined herein, when added to a TPE that includes a polypropylene thermoplastic phase. Thus, in some embodiments, foams of the invention may include additives of the same polymer type as one of the polymeric components of the base polymeric material and still may be free of melt strength enhancing additives.

In some embodiments, foams of the invention are free of material formed on surfaces of the foam which limit water absorption, such as hydrophobic coating layers and/or co-extruded solid layers (not including, by definition, surface skins inherently formed at certain die temperatures). It should be understood, however, that certain foams of the invention (in this set of embodiments) may also include layers or coatings that improve other properties of the foam such as surface gloss, lubricity or abrasion resistance.

As noted above, foams of the invention have lower water absorption than conventional foams at a given density or over a given foam density range. In some cases, foams of the invention have a foam density of between about 0.30 grams/cubic centimeter and about 0.70 grams/cubic centimeter. Over this density range, the foams may have a complete submersion water absorption of less than about 35 percent, less than about 20 percent, or less than about 5 percent. In some cases, foams of the invention have a foam density of between about 0.35 grams/cubic centimeter and about 0.60 grams/cubic centimeter. Over this density range, the foams may have a complete submersion water absorption of less than about 35 percent, less than about 20 percent, or less than about 5 percent. In some cases, foams of the invention have a foam density of between about 0.40 grams/cubic centimeter and about 0.50 grams/cubic centimeter. Over this density range, the foams may have a complete submersion water absorption of less than about 35 percent, less than about 20 percent, or less than about 5 percent.

In one preferred set of embodiments of the present invention, the foams are made of a thermoplastic elastomer (TPE), as described further below. However, it should be understood that other types of thermoplastic polymeric materials including amorphous, semicrystalline, or crystalline materials may also be used in accordance with the present invention.

Thermoplastic elastomers are a group of materials having properties which fall between cured rubbers and soft plastics, and are known to be used for seals, gaskets, weatherstripping, shoe soles, and in general, flexible parts. TPEs are hybrid material systems including at least two or more intermingled polymer systems, each having its own phase and softening temperature (Ts). TPEs are made up of a hard thermoplastic phase and a soft elastomeric phase. The useful temperature of a TPE occurs in the region where the soft phase is above and the hard phase is below their respective Ts. The hard phase acts to anchor or restrict the movement of polymer chains of the soft phase, generating resistance to the deformation of the TPE. The reinforcement of the hard phase disappears above its Ts, and the TPE becomes a viscous liquid that can be shaped in the same general manner as an unvulcanized thermoset rubber. Upon cooling below its Ts, the hard phase resolidifies and the TPE again becomes rubberlike. In contrast to the irreversible cleavage of the chemical crosslinks of a thermoset rubber, the heating and cooling through the hard phase Ts is reversible and thermoplastic in behavior. Such properties give TPEs the performance properties of conventional thermoset rubber and advantageously allow them to be molded or extruded as if they were rigid thermoplastics. TPEs may include block or graft copolymers and elastomer/thermoplastic compositions. TPEs are further described in Modem Plastics World Encyclopedia 2001, pp. B39-B40, the pages of which are incorporated herein by reference.

The TPE hard phase may be a single or a combination of polymers, including, but not limited to, styrenic (e.g., polystyrene), olefinic (e.g., polyethylene, polypropylene), crosslinkable polyolefins, polyester, polyamide, polyurethane, and halogenated polymers (e.g., polyvinyl chloride).

The TPE soft phase may be, for example, ethylene-propylene rubber (EPR), nitrile-butadiene rubber (NBR), or ethylene-propylene-diene monomer rubber (EPDM). The soft phase may be uncrosslinked or partially or fully crosslinked. The microcellular TPE structures of the present invention are particularly advantageous when crosslinked. Crosslinked, as used herein, means that at least 5% of the polymer chains are connected to another polymer chain. Crosslinking may be accomplished via a variety of known mechanisms including via electron beam radiation, free radical generation, crosslinking agents, or vulcanization.

Preferably, the TPE materials are thermoplastic vulcanizates (TPVs). In general, TPVs are TPEs that include a cross-linked (fully or partially) soft phase. TPVs usually have a polyolefin resin (e.g., polypropylene and/or polyethylene) continuous matrix that also contains grafted and crosslinked ethylene-propylene rubber (EPR) or ethylene-propylene-diene monomer (EPDM) copolymers, filler (often talc) and mineral oil. One particularly preferred TPV material has a polypropylene thermoplastic phase and a fully cross-linked EPDM soft phase. Examples of TPE materials are those sold under the tradenames Santoprene by Advanced Elastomer Systems LP (AES), Sarlink by DSM, Uniprene by Teknor-Apex, Excelink by JSR, Forprene by PolyOne, NexPrene by Thermoplastic Rubber Systems (TRS), Milastomer by Mitsui and Multiprene by Multibase. A more complete list of TPE and TPV tradenames and suppliers can be found in the Modem Plastics World Encyclopedia 2001, pp. F17-F18.

In some cases, foams of the invention may be made from TPE materials having low durometers. It is particularly challenging, or even impossible, to foam such low durometer materials using conventional techniques because of the large percentage of soft-phase material and/or other processing aids that hinder conventional foaming. In some embodiments, foams of the present invention may be made from TPE materials having a durometer of less than 60 Shore A; in other cases, less than 55 Shore A; or even, less than 45 Shore A. In some cases, the minimum Shore A value may be, for example, 35 Shore A. The TPE foams having the above-described durometer values may have a void volume of at least about 10%. In other cases, even high density reductions with the above-described durometer values may be achieved such as at least about 30%, at least about 45%, or even at least about 60%. Density may be controlled in part by controlling the processing conditions described further below.

Advantageously, these TPE materials having low durometers may be processed with physical blowing agents, as described further below. In these embodiments, the articles may be substantially free of residual chemical blowing agents or by-product of chemical blowing agent.

The foams of the present invention also may include a variety of other components. Such components can be other polymeric materials, fillers, nucleating agents, plasticizers, lubricants, colorants or any other additive or processing aid known in the art.

Foams of the present invention advantageously have little or no surface porosity and a relatively closed cell structure. The lack of surface porosity and closed cell structure limits absorption of water because water does not have a pathway to flow into the cell structure and, thus, be absorbed by the foam material. In some cases, foams of the present invention may have a thin skin, for example, on the order of 0.1 to 3.0 microns. It is believed that the little or no surface porosity in foams of the present invention is the primary factor in the low U-shape water absorptions described above. Because of the lack of porosity, water is not absorbed through the surface and into the structure. It should be understood that the relatively closed cell structure also contributes to the low U-shape water absorptions. It is believed that the combination of the little or no surface porosity and relatively closed cell structure both lead to the low complete submersion water absorptions.

In some cases, it may be preferable for the foams of the present invention to be microcellular polymeric materials. Microcellular polymeric materials have an average cell size of less than about 100 microns. In some cases, the microcellular polymeric materials have an average cell size of less than 80 microns, or less than 50 microns. Microcellular materials may be produced in the above-noted density ranges, as well as densities outside of the above-noted ranges. It has been observed that the small cells of microcellular materials can limit water absorption.

The foam articles may be used in a variety of applications. Suitable applications include, but are not limited to, applications in which low water absorption properties are desirable such as gaskets, seals or weatherstrips.

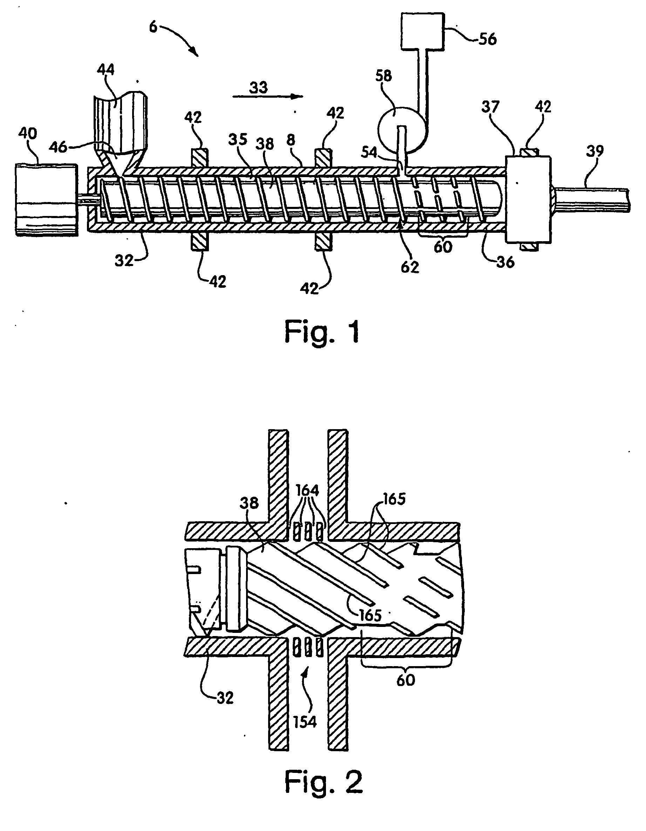

Referring now to Fig. 1, a system 6 for the production of foam of the present invention is illustrated schematically. An extruder 8 includes a screw 38 that rotates within a barrel 32 to convey, in a downstream direction 33, polymeric material in a processing space 35 between the screw and the barrel. Although not shown in detail, screw 38 may include feed, transition, gas injection (or wiping), mixing, and metering sections. The polymeric material is extruded through a die 37 fluidly connected to processing space 35 and fixed to a downstream end 36 of barrel 32. Die 37 is configured to form an extrudate 39 of foam in the desired shape, as described further below.

The extrusion screw is operably connected, at its upstream end, to a drive motor 40 which rotates the screw within barrel 32. Positioned along barrel 32, optionally, are temperature control units 42. Control units 42 can be electrical heaters, can include passageways for temperature control fluid, and or the like. Units 42 can be used to heat a stream of pelletized, powdery or fluid polymeric material within the barrel to facilitate melting, and/or to cool the stream to control viscosity and, in some cases, blowing agent solubility. The temperature control units can operate differently at different locations along the barrel, that is, to heat at one or more locations, and to cool at one or more different locations. Any number of temperature control units can be provided. Temperature control units also can be supplied to heat a die to which the extrusion system is connected.

Barrel 32 is constructed and arranged to receive a precursor of polymeric material. As used herein, "precursor of polymeric material" is meant to include all materials that are fluid, or can form a fluid and that subsequently can harden to form a foam article. Typically, the precursor is defined by polymer pellets, and can include other species such as processing aids, fillers and nucleating agents. Suitable polymeric materials have been described further above.

Introduction of the pre-polymeric precursor, typically, utilizes a standard hopper 44 for containing pelletized polymeric material to be fed into the extruder barrel through orifice 46, although a precursor can be a fluid prepolymeric material injected through an orifice and polymerized within the barrel via, for example, auxiliary polymerization agents. In connection with the present invention, it is important only that a fluid stream of polymeric material be established in the system. From hopper 44 pellets are received into the feed section of the screw and conveyed in a downstream direction in polymer processing space 35 as the screw rotates. Heat from extrusion barrel 32 and shear forces arising from the rotating screw, act to soften the pellets within the transition section. Typically, by the end of the first metering section the softened pellets have been gelated, that is, welded together to form a uniform fluid stream substantially free of air pockets.

Foam production according to the present invention uses a physical blowing agent, that is, an agent that is a gas under ambient conditions. In embodiments in which a physical blowing agent is used, along barrel 32 of extruder 30 is a port 54 in fluid communication with a source 56 of a physical blowing agent. The physical blowing agents, nitrogen, is used in connection with the invention and, according to a preferred embodiment, source 56 provides nitrogen, as a blowing agent. Supercritical fluid blowing agents are preferred, particularly supercritical nitrogen. Where a blowing agent that is a gas under ambient conditions is used, a single-phase solution of polymeric material and blowing agent is created having viscosity reduced to the extent that extrusion, injection molding and blow molding is readily accomplished even with material of melt flow no more than about 0.2 g/10 min.

Nitrogen can be used alone, in combination with another blowing agent (e.g. carbon dioxide) that adds to or changes the blowing agent properties, or in combination with another agent that does not materially change the blowing process.

In embodiments that utilize physical blowing agents, the articles may be substantially free of residual chemical blowing agents or by-product of chemical blowing agent.

A pressure and metering device 58 typically is provided between blowing agent source 56 and port 54. Device 58 can be used to meter the blowing agent so as to control the amount of the blowing agent in the polymeric stream within the extruder to maintain a level of blowing agent at a particular level. In a preferred embodiment, device 58 meters the mass flow rate of the blowing agent.

The pressure and metering device can be connected to a controller (not shown) that also is connected to drive motor 40 and/or a drive mechanism of a gear pump (not shown) to control metering of blowing agent in relationship to flow of polymeric material to very precisely control the weight percent blowing agent in the fluid polymeric mixture.

Although port 54 can be located at any of a variety of locations along the barrel, according to a preferred embodiment it is located just upstream from a mixing section 60 of the screw and at a location 62 of the screw where the screw includes unbroken flights.

It should be understood that other types of polymer processing systems may also be used to produce the polymeric foam material of the present invention.

Referring now to Fig. 2, one embodiment of the blowing agent port is illustrated in greater detail and, in addition, two ports on opposing top and bottom sides of the barrel are shown. In this preferred embodiment, port 154 is located in the gas injection section of the screw at a region upstream from mixing section 60 of screw 38 (including highly-broken flights) at a distance upstream of the mixing section of no more than about 4 full flights, preferably no more than about 2 full flights, or no more than 1 full flight. Positioned as such, injected blowing agent is very rapidly and evenly mixed into a fluid polymeric stream to promote production of a single-phase solution of the foamed material precursor and the blowing agent.

Port 154, in the preferred embodiment illustrated, is a multi-hole port including a plurality of orifices 164 connecting the blowing agent source with the extruder barrel. As shown, in preferred embodiments a plurality of ports 154 are provided about the extruder barrel at various positions radially and can be in alignment longitudinally with each other. For example, a plurality of ports 154 can be placed at the 12 o'clock, 3 o'clock, 6 o'clock, and 9 o'clock positions about the extruder barrel, each including multiple orifices 164. In this manner, where each orifice 164 is considered a blowing agent orifice, the invention includes extrusion apparatus having at least about 10; in some cases, at least about 40; in some cases, at least about 100; in some cases, at least about 300; in some cases, at least about 500; and, in some cases, at least about 700 blowing agent orifices in fluid communication with the extruder barrel, fluidly connecting the barrel with a source of blowing agent.

Also in some embodiments is an arrangement (as shown in Fig. 2) in which the blowing agent orifice or orifices are positioned along the extruder barrel at a location where, when a preferred screw is mounted in the barrel, the orifice or orifices are adjacent full, unbroken flights 165. In this manner, as the screw rotates, each flight, passes, or "wipes" each orifice periodically. This wiping increases rapid mixing of blowing agent and fluid foamed material precursor by, in one embodiment, essentially rapidly opening and closing each orifice by periodically blocking each orifice, when the flight is large enough relative to the orifice to completely block the orifice when in alignment therewith. The result is a distribution of relatively finely-divided, isolated regions of blowing agent in the fluid polymeric material immediately upon injection and prior to any mixing. In this arrangement, at a standard screw revolution speed of about 30 rpm, each orifice is passed by a flight at a rate of at least about 0.5 passes per second, more preferably at least about 1 pass per second, more preferably at least about 1.5 passes per second, and more preferably still at least about 2 passes per second. In preferred embodiments, orifices 154 are positioned at a distance of from about 15 to about 30 barrel diameters from the beginning of the screw (at upstream end 34).

It should be understood that not all systems of the invention utilize multiple blowing agent ports or multiple orifices. Certain systems may have a single blowing agent port and/or a single orifice.

Referring again to Fig. 1, mixing section 60 of screw 38, following the gas injection section, is constructed to mix the blowing agent and polymer stream to promote formation of a single phase solution of blowing agent and polymer. The mixing section includes broken flights which break up the stream to encourage mixing.

Die 37 includes inner passageways having shape and dimensions (die geometry) to control the shape of the extrudate. The die, in this embodiment, can have any of a variety of configurations, as is known in the art, to produce microcellular foam in specific forms, for example, sheets, profiles, or strands. Dies described in international patent publication no. WO 98/08667 incorporated herein by reference can be used. Particularly preferred dies for production of TPV foams are described further below.

In addition to shaping the extrudate released from such a die, the die also performs two other functions when processing microcellular foam materials. The die must first be capable of providing sufficient pressure, at the desired polymer flow rate and melt temperature, to maintain the single phase polymer/blowing agent solution, created in the mixing section of the screw, to the entrance of the die. As the pressure in the single-phase solution drops as the solution flows through die internal passageways, solubility of the blowing agent in the polymer decreases, which is the driving force for cell nucleation caused by the blowing agent coming out of solution. The extent of pressure drop depends upon the dimensions of the passageway. Specifically, the dimensions that affect the pressure drop include the shape of the passageway, the length of the passageway, and the thickness of the passageway. Under processing conditions for TPE and TPV, the pressure drop across the die is generally greater than 700 psi, preferably greater than 800 psi, and more preferably greater than 900 psi.

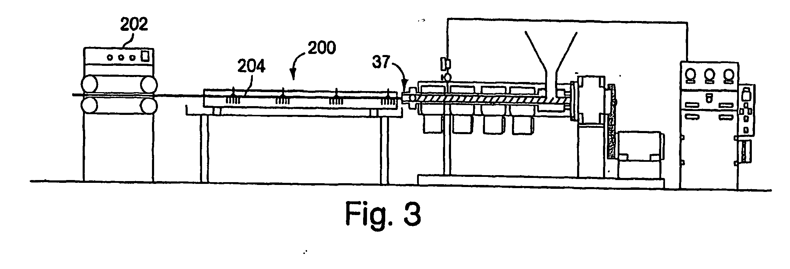

As a result of elevated temperatures, extrudate 39 that is released from the die is typically soft enough so that the nucleated cells grow. As the extrudate cools in the atmosphere and becomes more solid, cell growth is restricted. In certain embodiments, it is advantageous to provide external cooling means to speed the cooling rate of the extrudate. For example, in these embodiments, cooling may be accomplished by blowing air or liquid such as water mist on the extrudate, contacting the extrudate with a cool surface, submerging the extrudate in a liquid medium or a combination of the above; Fig. 3 schematically illustrates the combination of blowing a fine water 204 mist over the top half of an extruded profile that is floating on the surface of chilled water in a water bath 200. Fig. 3 also shows a puller downstream to take the extruded foam profile away from the extruder die 37. Other equipment (not illustrated) downstream of the die can be used, as required, for additional shaping of the extrudate into a final form.

As mentioned, in one aspect the present invention involves control over polymer extrusion foaming conditions resulting in polymer extrudate having surprisingly low water absorption. The conditions may be controlled, for example, to produce relatively closed cell structures and/or little or no surface porosity which promote low water absorptions. Conditions that promote low water absorption follow, however it should be understood that all of these conditions may not be satisfied when producing foams having low water absorptions:

Die exit taper angle: With reference to International Patent Publication No. WO 98/08667, referenced above, a die may have a parallel exit geometry or in some case preferably selected to have a passageway having a cross-sectional dimension that decreases in a downstream direction. The included angle of taper may preferably be less than 14 degrees and more preferably less than or equal to 10 degrees for low water absorption.

Blowing agent: As mentioned above in connection with the description of Fig. 1, nitrogen is used as a blowing agents in the present invention.

Nitrogen has been found to work especially effectively as a blowing agent with TPEs to produce low water absorption polymeric extrudate. Where nitrogen is used it preferably is present as at least 50% of the blowing agent, and more preferably the blowing agent consists entirely of nitrogen. Nitrogen is present in an amount of less than about 1% (e.g., between about 0.05% and about 0.9%), as a function of weight of polymeric material into which it is introduced; in other embodiments, between about 0.1% and about 0.7%; and, in other embodiments, between about 0.2% and about 0.5%. In some cases, but not all, use of blowing agent content in excess of the aforementioned range may result in production of foams having higher water absorption values as a result of a higher number of open cells and/or increased surface porosity.

Melt temperature: Extrusion temperatures below plastic resin manufacturers' recommendations may be used to achieve the desired low water absorption, density and good surface finish. More specifically, indicated melt temperatures ranging from 310 to 350°F, depending on material grade have been found to provide low water absorption when used in combination with the die designs and blowing agent levels mentioned above.

An important difference in TPE processing, relative to more standard amorphous and semi-crystalline polymers, is the method in which the final operating profile is achieved. Typically, extruder set temperatures are reduced from standard startup conditions prior to starting flow of the blowing agent into the extruder to increase the pressure in the system by reducing the polymer melt temperature to ensure that the blowing agent will remain in solution. With TPVs, it has also been found that low water absorption and smooth surface characteristics are achieved when flow of the blowing agent into the material begins prior to reducing extruder set temperatures from standard startup conditions of the polymer melt. This procedure is effective with these materials because of the small changes in system pressures with changes in output and melt temperature as noted above.

Extruder and die temperature profile: Conditions in the extrusion apparatus may be controlled such that the polymeric material exiting the extruder has a melt temperature conducive to generating foam (e.g., microcellular foam), as described above. Furthermore, the extruder and die temperature profile may be preferably controlled to ensure a relatively consistent melt temperature across the profile of the exiting molten polymer to obtain a consistent microcellular cell structure across the extruded profile; otherwise, larger cells may be near the inner or outer surface and will lead to interconnected or open cells that increase the water absorption of the extruded part.

The extruder and die temperature profile must also provide a sufficiently molten outer layer that a smooth unbroken outer (and for tubes, inner) skin is obtained. If the extrudate surface is too cold upon exit from the die, surface porosity (e.g., microtears or voids) may develop that will lead to increased water absorption. If the extrudate is too hot upon exit from the die, surface voids may develop as a result of lower melt strength of the material. Specific extrudate temperatures depend, in part, on material type and other processing conditions (e.g., blowing agent content).

The function and advantage of these and other embodiments of the present invention will be more fully understood from the examples below. The following examples are intended to illustrate the benefits of the present invention, but do not exemplify the full scope of the invention.

*Example 1: Extruded Product using Nitrogen as Blowing Agent*

Extrusion Equipment: A line for the production of extruded profiles was assembled employing a 2 ½ in. diameter, 32:1 L:D single screw extruder (Akron Extruders, Canal Fulton, OH). An injection system for the injection of $N_2$ into the extruder was placed at approximately 8 diameters from the exit of the extruder. The injection system included 2 equally spaced circumferential, radially positioned ports, each port including 176 orifices, each orifice of 0.020 inch diameter, for a total of 352 orifices. The injection system included an air actuated control valve to precisely meter a mass flow rate of blowing agent at rates from 0.04 to 3.5 lbs/hr at pressures up to 5500 psi.

The screw of the primary extruder was a specially designed screw to provide feeding, melting and mixing of the polymer/talc concentrate followed by a mixing section for the dispersion of blowing agent in the polymer.

Connected to the exit of the extruder was a horizontally mounted, in-line extrusion annular profile die. The head was designed by Trexel Inc. (Woburn, MA) and was equipped with taps for measurement of melt temperature and pressure just prior to entry into the die. It employed a conventional 3-spider type flow distribution channel and a die adjustment system that allowed movement of the die relative to the fixed position tip. This feature provides the ability to produce uniform wall thickness by "centering" the die to the mandrel. A wide range of exit gaps and exit taper angles were possible depending upon the chosen tooling design. The head was also equipped with an air channel and regulator that allowed the introduction and control of air pressure through the center of the head. This feature allowed the use of air to cool and support the ID of hollow profiles when used in conjunction with extrusion tips designed with an appropriate air passageway.

Upon exit from the die, the extrudate entered a cooling trough of approximately 10 feet in length. The trough was equipped with a closed loop water cooling system, flow controls and spray heads. The system was plumbed and adjusted to provide a fixed water level in the trough to support and cool the extrudate. Spray heads were mounted along the trough length to cool the entire perimeter of the extrudate. Air nozzles were provided at the end of the trough to remove the water from the outer surface of the extrudate.

A standard, 36 inch length belt hauloff (Custom Downstream Systems, St. Laurent, Quebec, Canada) equipped with a variable speed drive was placed at the exit of the water trough. This system pulled the extrudate through the cooling trough at constant speed to provide the target product dimensions.

Complete Submersion Water Absorption Test: The complete submersion water absorption test procedure generally followed that outlined in ASTM D 1056 - 00 "Standard Specifications for Flexible Cellular Materials-Sponge or Expanded Rubber" Sections 42 through 48. Modifications or elaborations on the ASTM test method were:

Standard bottled water was used rather than distilled water.
Samples were tested in the shapes as produced.
Blot drying was performed on all surfaces exposed to water including inner surfaces on tubular samples.
All samples were 50 mm (1.97") long.

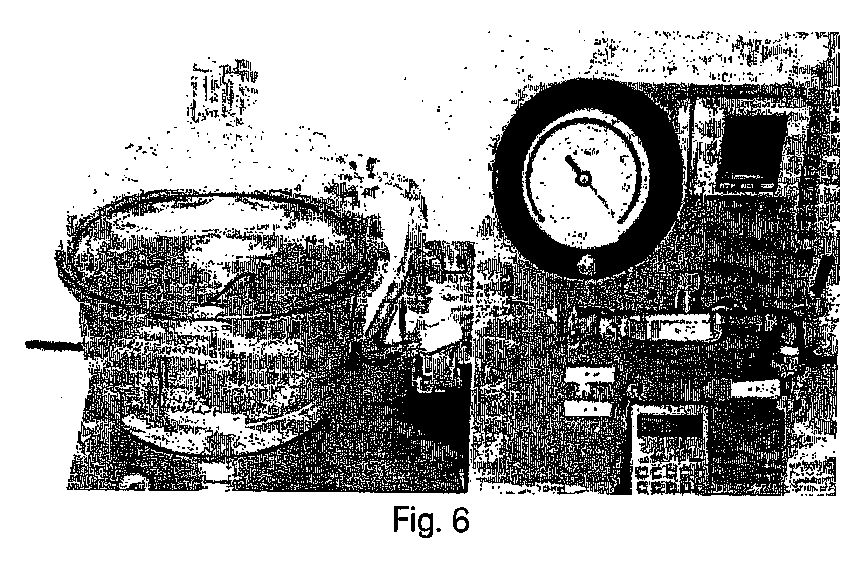

Fig. 6 is a photograph of the water absorption test equipment and setup.

Density: The density was determined using a Mettler Toledo AG104 densimeter using ethanol as a medium.

Extrusion Processing Parameters: Thermoplastic vulcanizate (Santoprene 201-73) pellets were introduced into the main hopper of the extrusion line described above. The tooling attached to the head consisted of a die with a 7° taper angle and a tip of a 7° taper angle.

The extruder speed was adjusted to provide an output of approximately 66 lb/hr. Barrel temperatures were set to maintain a melt temperature of approximately 329 °F at the entrance to the die. $N_2$ blowing agent was injected at a 0.32 weight percent blowing agent concentration in the material.

The above conditions produced a tube that was 0.076 inch thick by approximately 0.536 inches in diameter at a density of 0.46 gm/cc. The water absorption of this sample was 33%.

*Examples 2 - 13: Extruded Product using Nitrogen as Blowing Anent*

See procedure for Example 1. The material and process condition differences between the Examples are given in Table 1 below. The properties of the resultant extruded foam product are given in Table 2.

**Table 1**
**Process Conditions for Examples using Nitrogen as Blowing Agent**

| Example | Material | Exit Gap | Exit Taper Angle | Output | Tm | N2 Level |
|---|---|---|---|---|---|---|
| | | in | deg | lb/hr | degF | % |
| 1 | Santoprene 201-73 | 0.028 | 14 | 66 | 329 | 0.32 |
| 2 | Santoprene 201-73 | 0.028 | 0 | 67 | 327 | 0.33 |
| 3 | Santoprene 201-73 | 0.028 | 6 | 92 | 340 | 0.30 |
| 4 | Santoprene 201-73 | 0.028 | 6 | 88 | 341 | 0.41 |
| denotes reference example 5 | Santoprene 201-73 | 0.028 | 6 | 88 | 341 | 0.50 |
| denotes reference example 6 | Santoprene 201-68W | 0.028 | 6 | 100 | 339 | 0.25 |
| 7 | Santoprene 201-68W | 0.028 | 6 | 97 | 339 | 0.25 |
| 8 | Santoprene 121-68W | 0.028 | 6 | 101 | 337 | 0.39 |
| denotes reference example 9 | Santoprene 121-68W | 0.028 | 6 | 101 | 336 | 0.40 |
| 10 | Sarlink X8168 | 0.021 | 6 | 100 | 327 | 0.40 |
| 11 | Sarlink X8168 | 0.028 | 6 | 100 | 325 | 0.30 |
| 12 | Uniprene 7100-64 | 0.028 | 6 | 100 | 331 | 0.16 |
| 13 | Uniprene 7100-64 | 0.028 | 6 | 100 | 319 | 0.28 |

**Table 2**
**Foam Properties for Examples using Nitrogen as Blowing Agent**

| Example | Material | OD | Wall Thickness | Density | CS Water Absorption |
|---|---|---|---|---|---|
| | | in | in | g/cc | % |
| 1 | Santoprene 201-73 | 0.536 | 0.076 | 0.46 | 33 |
| 2 | Santoprene 201-73 | 0.518 | 0.060 | 0.46 | 4.3 |
| 3 | Santoprene 201-73 | 0.541 | 0.056 | 0.60 | 0.1 |
| 4 | Santoprene 201-73 | 0.567 | 0.054 | 0.55 | 27 |
| denotes reference example 5 | Santoprene 201-73 | 0.566 | 0.055 | 0.56 | 44 |
| denotes reference example 6 | Santoprene 201-68W | | | 0.53 | 51 |
| 7 | Santoprene 201-68W | | | 0.53 | 13 |
| 8 | Santoprene 121-68W | 0.621 | 0.056 | 0.50 | 0.4 |
| denotes reference example 9 | Santoprene 121-68W | 0.589 | 0.050 | 0.54 | 49 |
| 10 | Sarlink X8168 | 0.549 | 0.052 | 0.53 | 0.3 |

(continued)

**Foam Properties for Examples using Nitrogen as Blowing Agent**

| Example | Material | OD | Wall Thickness | Density | CS Water Absorption |
|---|---|---|---|---|---|
| | | in | in | g/cc | % |
| 11 | Sarlink X8168 | 0.549 | 0.052 | 0.52 | 9 |
| 12 | Uniprene 7100-64 | 0.56 | 0.060 | 0.53 | 7.2 |
| 13 | Uniprene 7100-64 | 0.57 | 0.043 | 0.63 | 1.9 |

The Examples show that TPE foams having low complete submersion water absorptions may be obtained using methods of the present invention.

Examples 1 - 2 demonstrate the effect of changing the die exit taper angle from 14 degrees to 0 degrees (or parallel). The parallel exit channel provides a lower water absorption than that with an exit taper angle of 14 degrees.

Examples 3-5 demonstrate the effect of increasing the SCF content in the molten polymer on the water absorption. The greater the SCF content, the greater the water absorption. It should also be noted that these examples utilize a 6 degree included angle die exit; example 3 meets the industry requirement for automotive gaskets. Examples 3 and 4 produce TPE foams having a water absorption of less than 40 times (1-A)/A, wherein A is the foam density in g/cc. Example 5 produces a TPE foam having a water absorption of greater than 40 times (1-A)/A, wherein A is the foam density in g/cc.

Examples 6 and 7 demonstrate the effect of the extruder and die temperature profile. The only difference in run conditions was an intermediate heat zone being lowered from 20 degF from Example 6 to Example 7. Example 7 produces a TPE foam having a water absorption of less than 40 times (1-A)/A, wherein A is the foam density in g/cc. Example 6 produces a TPE foam having a water absorption of greater than 40 times (1A)/A, wherein A is the foam density in g/cc.

It is also possible to lower the temperature profile too far as can be seen in Examples 8 and 9. The difference between the two is that three intermediate heat zones are lowered 5 degF from Example 8 to Example 9. Example 8 produces a TPE foam having a water absorption of less than 40 times (1-A)/A, wherein A is the foam density in g/cc. Example 9 produces a TPE foam having a water absorption of greater than 40 times (1-A)/A, wherein A is the foam density in g/cc.

Examples 3, 8, 10 and 13 demonstrate that less than 5% water absorption can be obtained with different commercial brands and grades of TPE. The list of materials used in the Examples is only a small representation of all the materials that could be processed using this invention.

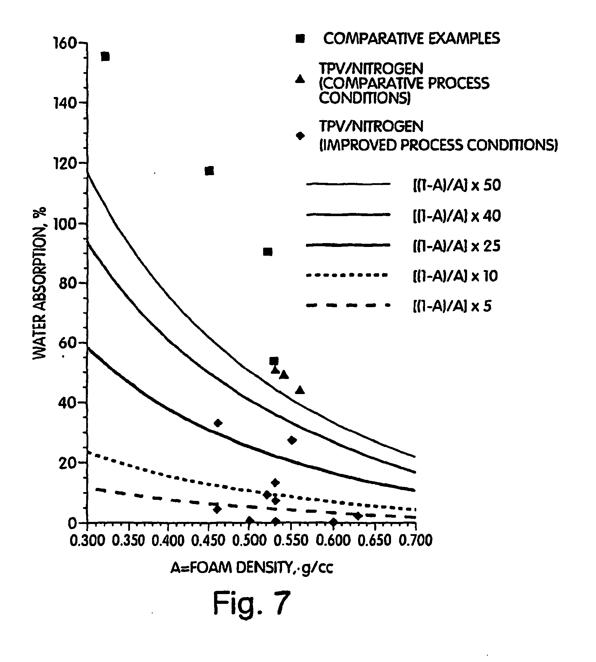

Figure 7 graphs the water absorption vs. foam density for Examples 1-13 and Comparative Examples 1-4. The lines for water absorption at various values of C as given above and shown in Fig. 4 are also overlaid on this chart for reference.

_Comparative Examples 1 - 4_

Samples were obtained from various sources and properties were measured using the same test equipment and procedures as outlined above. Table 3 gives the properties measured for each of the comparative examples. All examples are of a TPE foam having a water absorption of greater than 40 times (1-A)/A, wherein A is the foam density in g/cc.

**Table 3**
**Comparative Examples**

| Example | Material | Blowing Agent | OD | Wall Thickness | Density | CS Water Absorption |
|---|---|---|---|---|---|---|
| | | | in | in | g/cc | % |
| Comp. 1 | Sarlink | CBA | 0.730 | 0.082 | 0.32 | 155 |
| Comp. 2 | Sarlink | CBA | 0.900 | 0.140 | 0.52 | 90 |
| Comp. 3 | Sarlink | CBA | | | 0.45 | 117 |
| Comp. 4 | TPV | Water | | | 0.53 | 54 |

Reference _Example 14: Extruded Product using Carbon Dioxide as Blowing Agent_ Extrusion Equipment: A line for the production of extruded profiles was assembled employing a 60 mm diameter, 34:1 L:D single screw extruder (Krauss-Maffei, Munich, Germany). An injection system for the injection of $CO_2$ into the extruder was placed at approximately 20D diameters from the feed throat of the extruder. The injection system included 2 equally spaced circumferential, radially- positioned ports, each port including 176 orifices, each orifice of 0.020 inch diameter, for a total of 352 orifices. The injection system included an air actuated control valve to precisely meter a mass flow rate of blowing agent at rates from 0.04 to 3.5 lbs/hr at pressures up to 5500 psi.

The screw of the primary extruder was a specially designed screw to provide feeding, melting and mixing of the polymer/talc concentrate followed by a mixing section for the dispersion of blowing agent in the polymer.

Connected to the exit of the extruder was a horizontally mounted, in-line extrusion annular profile die. The head was designed by Trexel Inc. (Woburn, MA) and was equipped with taps for measurement of melt temperature and pressure just prior to entry into the die. It employed a conventional 2-spider type flow distribution channel and a die adjustment system that allowed movement of the die relative to the fixed position tip. This feature provides the ability to produce uniform wall thickness by "centering" the die to the mandrel. A wide range of exit gaps and exit taper angles were possible depending upon the chosen tooling design. The head was also equipped with an air channel and regulator that allowed the introduction and control of air pressure through the center of the head. This feature allowed the use of air to cool and support the inner diameter of hollow profiles when used in conjunction with extrusion tips designed with an appropriate air passageway.

Upon exit from the die, the extrudate was laid out on a conveyor belt and allowed to cool in the air.

Complete Submersion Water Absorption Test: The complete submersion water absorption test procedure generally followed that outlined in ASTM D 1056 - 00 "Standard Specifications for Flexible Cellular Materials-Sponge or Expanded Rubber" and that given under Example 1. Modifications or elaborations on the ASTM test method were: Vacuum pressure was 660 mm (26") Hg gauge.

Blot drying was performed on all surfaces exposed to water including inner surfaces on tubular samples.

All samples were 50 mm (1.97") long.

Extrusion Processing Parameters: Thermoplastic vulcanizate (Santoprene 121-68W228) pellets were introduced into the main hopper of the extrusion line described above. The tooling attached to the head consisted of a die with a 0° taper angle and a tip of 10° taper angle.

The extruder speed was adjusted to provide an output of approximately 55 lb/hr. Barrel temperatures were set to maintain a melt temperature of approximately 327 °F at entrance to the die. The carbon dioxide blowing agent was injected at a nominal rate to provide 0.39 weight % blowing agent concentration in the material. The complete submersion water absorption of this sample was 51 %.

*Examples 15 - 20: Extruded Product using Carbon Dioxide as Blowing Agent*

See procedure for Example 14. The material and process condition differences and the resultant foam properties are given in Table 4 below. Example 17 produces a TPE foam having a complete submersion water absorption of greater than 40 times (1-A)/A, wherein A is the foam density in g/cc. All other Examples produce a TPE foam having a complete submersion water absorption of less than 40 times (1-A)/A, wherein A is the foam density in g/cc.

Figure 8 graphs the complete submersion water absorption vs. foam density for Examples 14 - 20 and Comparative Examples 1-4. The lines for complete submersion water absorption at various values of C as given above and shown in Fig. 4 are also overlaid on this chart for reference.

**Table 4**
Reference **Examples using Carbon Dioxide as Blowing Agent**

| Example | Material | Tm | CO2 Level | Density | CS Water Absorption |
|---|---|---|---|---|---|
| | | degF | % | g/cc | % |
| 14 | Santoprene 201-68W228 | 334 | 2.4 | 0.36 | 51 |
| 15 | Santoprene 201-68W228 | 334 | 1.8 | 0.44 | 22 |
| 16 | Santoprene 201-68W228 | 334 | 1.2 | 0.46 | 7 |
| 17 | Santoprene 201-68W228 | 338 | 2.4 | 0.34 | 120 |
| 18 | Santoprene 201-68W228 | 338 | 1.2 | 0.33 | 10 |
| 19 | Sarlink 8168 | 329 | 1.8 | 0.58 | 4 |
| 20 | Sarlink 8168 | 347 | 1.8 | 0.36 | 55 |

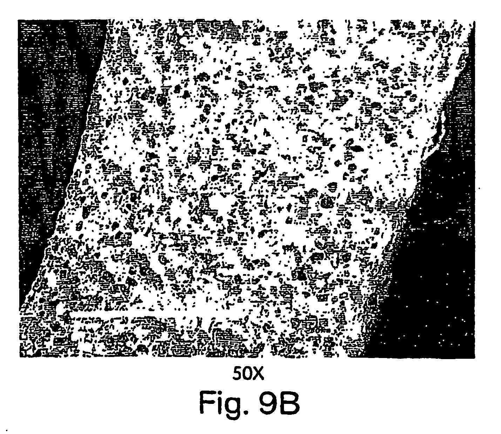

Sample tubes generated with carbon dioxide can also have low complete submersion water absorption; however, the cell sizes are larger and the cell size distribution is much wider for the carbon dioxide blown examples versus the nitrogen blown examples as seen in Fig. 9. The poorer cell structure leads to less consistent foam structure and tube surface, thus possibly resulting in a higher reject rate for low water absorption tubes in a manufacturing environment.

*Examples 21 - 24: Extruded Product: U-Test Water Absorption Test*

See Procedure for Example 1 except that water absorption properties were also measured using a U-test water absorption test. "U-test water absorption" was measured by immersing a sample under water in a "U" shape with sample ends remaining out of the water. The total sample length was 250 mm, with 25 mm remaining out of the water on each end. Samples were tested in the shapes as produced (e.g., tubular). Standard bottled water was used. A vacuum of 17 kPa absolute was maintained for 5 minutes, followed by 5 minutes at atmospheric pressure. The samples were weighed before and after immersion. Surface drying was performed on samples after immersion to eliminate excess water on sample surfaces using compressed air (9 psi) on all surfaces exposed to water including the inner surfaces of the samples. The U-test water absorption was calculated as follows:

$$WA\ (\%) = [(W_f - W_i)/W_i]/0.8 \times 100\%$$

where $W_f$ and $W_i$ are the final and initial weights, respectively and the 0.8 factor represents the proportion of the sample that is submerged in the water.

The material and process conditions differences between the Examples are given in Table 5. The properties of the resultant extruded foam product are give in Table 6.

**Table 5**
**Process Conditions for Examples Tested with U-Shape WA Test**

| Example | Material | Exit Gap | Tm | SCF Type | SCF Level |
|---|---|---|---|---|---|
| | | inch | °F | | % |
| 21 | Santoprene 121-68W228 | 0.031 | 335 | $N_2$ | 0.15 |
| 22 | Santoprene 121-68W228 | 0.031 | 334 | $N_2$ | 0.15 |
| denotes reference example 23 | Santoprene 121-68W228 | 0.031 | 335 | $CO_2$ | 0.40 |
| 24 | Santoprene 121-68W228 | 0.031 | 334 | $N_2$ | 0.35 |
| denotes reference example 25 | Santoprene 121-68W228 | 0.031 | 338 | $CO_2$ | 1.00 |

The Exit taper angle was 11 degrees and output was 100 lb/hr in all cases. The temperature of the barrel at the point of SCF injection was 360°F for examples 21 and 24 and 380°F for examples 22 and 23.

**Table 6**
**Foam Properties for Additional Examples Tested with an Alternative WA Test**

| Example | OD | Wall Thickness | Density | Water Absorption | Water Absorption |
|---|---|---|---|---|---|
| | in | in | g/cc | Submerged Test, % | U- Test, % |
| 21 | 0.62 | 0.084 | 0.62 | 15 | 0.03 |
| 22 | 0.76 | 0.074 | 0.61 | 20 | 0.12 |
| denotes reference example 23 | 0.75 | 0.072 | 0.61 | 25 | 0.26 |
| 24 | 0.66 | 0.088 | 0.57 | 18 | 0.19 |
| denotes reference example 25 | 0.73 | 0.083 | 0.45 | 34 | 0.18 |

The Examples show that TPE foams having low U-test water absorptions and low complete submersion water absorptions may be obtained using methods of the present invention.

Example 23 shows the effect of $CO_2$ as a blowing agent. Example 24 shows the effect of a higher level of nitrogen as a blowing agent.

*Examples 26-28: Extruded Product: Low Durometer TPE*

See procedure for Example 1. The material and process condition differences are shown in Table 7. The resultant foam properties are given in Table 8 below.

**Table 7**
**Process Conditions for Low Shore A Examples**

| Example | Material | Durometer | Exit Gap | Exit Taper | Tm | SCF Type | SCF Level |
|---------|----------|-----------|----------|------------|------|----------|-----------|
| | | Shore A | Inch | Deg. | °F | | % |
| 26 | Sarlink XRD8145 Blk. | 45 | 0.035 | 12 | 345 | $N_2$ | 0.38 |
| 27 | NexPrene 1045.5 Blk. | 45 | 0.042 | 12 | 324 | $N_2$ | 0.15 |
| 28 | NexPrene 1045.5 Blk. | 45 | 0.031 | 11 | 319 | $N_2$ | 0.25 |

The output was 96 lb/hr in Examples 26 - 28. The temperature of the barrel at the point of SCF injection was 360°F for Examples 26 - 28.

**Table 8**
**Foam Properties for Low Shore A Examples**

| Example | OD | Wall Thickness | Density | CS Water Absorption |
|---------|------|----------------|---------|---------------------|
| | in | in | g/cc | % |
| D | 0.575 | 0.064 | 0.59 | 0.1 |
| E | 0.625 | 0.070 | 0.57 | 2.9 |
| F | 0.625 | 0.072 | 0.60 | 3.6 |

While several embodiments of the invention have been described and illustrated herein, those of ordinary skill in the art will readily envision a variety of other means and structures for performing the functions and/or obtaining the results or advantages described herein, and each of such variations or modifications is deemed to be within the scope of the present invention. More generally, those skilled in the art would readily appreciate that all parameters, dimensions, materials, and configurations described herein are meant to be exemplary and that actual parameters, dimensions, materials, and configurations will depend upon specific applications for which the teachings of the present invention are used. Those skilled in the art will recognize, or be able to ascertain using no more than routine experimentation, many equivalents to the specific embodiments of the invention described herein. It is, therefore, to be understood that the foregoing embodiments are presented by way of example only and that, within the scope of the appended claims and equivalents thereto, the invention may be practiced otherwise than as specifically described. The present invention is directed to each individual feature, system, material and/or method described herein. In addition, any combination of two or more such features, systems, materials and/or methods, if such features, systems, materials and/or methods that are not mutually inconsistent, is included within the scope of the present invention.

In the claims (as well as in the specification above), all transitional phrases such as "comprising", "including", "carrying", "having", "containing", "involving", "composed of", "made of", "formed of' and the like are to be understood to be open-ended, i.e. to mean including but not limited to. Only the transitional phrases "consisting of" and "consisting essentially of" shall be closed or semi-closed transitional phrases, respectively, as set forth in the United States Patent Office Manual of Patent Examining Procedures, section 2111.03.

**Claims**

1. A method comprising:

   processing polymeric material comprising a thermoplastic elastomer in an extruder;
   introducing a blowing agent comprising nitrogen into the polymeric material in the extruder in an amount less than about 1.0% by weight based on the weight of the thermoplastic elastomer; and
   extruding a foam article having a density of between 0.30 grams/cubic centimeter and 0.70 grams/cubic centimeter and having:

   (i) a complete submersion water absorption of less than 35%, or
   (ii) a U-test water absorption of less than or equal to 0.5%.

2. A method as in claim 1, wherein the foam article has a complete submersion water absorption of less than about 20 percent.

3. A method as in claim 1, wherein the foam article has a complete submersion water absorption of less than about 5 percent.

4. A method as in claim 1, wherein the foam article is a microcellular material having an average cell size of less than about 100 microns.

5. A method as in claim 1, wherein the thermoplastic elastomer is a thermoplastic vulcanizate.

6. A method as in claim 1, wherein the polymeric material is essentially free of residual chemical blowing agent or by-product of chemical blowing agent.

7. A method as in claim 1, wherein the foam article is a gasket, a seal, or a weatherstrip.

8. A method as in claim 1, wherein the foam article is free of an auxiliary layer formed on a surface of the foam article that limits water absorption.

9. A method as in claim 1, wherein the article has a complete submersion water absorption of less than 35% and a density of between 0.30 grams/cubic centimeter and 0.70 grams/cubic centimeter.

10. A method as in claim 1, wherein the mixture of the blowing agent and the polymeric material is extruded through a die including an exit section having a cross-sectional dimension that decreases in a downstream direction with a taper angle of less than 14 degrees.

11. A method as in claim 1, wherein processing the mixture of the blowing agent and the polymeric material includes forming a single-phase solution of blowing agent and polymeric material.

12. A method as in claim 1, wherein the physical blowing agent comprising nitrogen is introduced into the polymeric material in the extruder in an amount between about 0.05% and about 0.9% by weight based on the weight of the thermoplastic elastomer.

13. A method as in claim 1, wherein the foam article has a density of between 0.35 grams/cubic centimeter and 0.6 grams/cubic centimeter.

14. A method as in claim 1, wherein the foam article has a U-test water absorption of less than about 0.1%.

15. A method as in claim 1, wherein the blowing agent is a physical blowing agent.

**Patentansprüche**

1. Verfahren, umfassend:

Verarbeiten eines polymeren Materials, umfassend ein thermoplastisches Elastomer, in einem Extruder, Einführen eines Blasmittels, umfassend Stickstoff, in das polymere Material in dem Extruder in einer Menge von weniger als etwa 1,0 Gew.%, bezogen auf das Gewicht des thermoplastischen Elastomers; und Extrudieren eines Schäumgegenstandes mit einer Dichte von zwischen 0,30 g/cm$^3$ und 0,70 g/cm$^3$ und mit:

(i) einer vollständigen Untertauch-Wasserabsorption von weniger als 35%, oder
(ii) einer U-Test-Wasserabsorption von weniger als oder gleich 0,5%.

2. Verfahren nach Anspruch 1, worin der Schäumgegenstand eine vollständige Untertauch-Wasserabsorption von weniger als etwa 20% hat.

3. Verfahren nach Anspruch 1, worin der Schäumgegenstand eine vollständige Untertauch-Wasserabsorption von weniger als etwa 5% hat.

**4.** Verfahren nach Anspruch 1, worin der Schäumgegenstand ein mikrozelluläres Material mit einer durchschnittlichen Zellgröße von weniger als etwa 100 $\mu$m ist.

**5.** Verfahren nach Anspruch 1, worin das thermoplastische Elastomer ein thermoplastisches Vulkanisat ist.

**6.** Verfahren nach Anspruch 1, worin das polymere Material im Wesentlichen frei von restlichem chemischem Blasmittel oder Nebenprodukt des chemischen Blasmittels ist.

**7.** Verfahren nach Anspruch 1, worin der Schäumgegenstand eine Dichtung, Abdichtung oder Dichtungsgummi ist.

**8.** Verfahren nach Anspruch 1, worin der Schäumgegenstand frei von einer Hilfsschicht ist, die auf einer Oberfläche des Schäumgegenstandes gebildet ist, die die Wasserabsorption begrenzt.

**9.** Verfahren nach Anspruch 1, worin der Gegenstand eine vollständige Untertauch-Wasserabsorption von weniger als 35% und eine Dichte zwischen 0,30 g/cm$^3$ und 0,70 g/cm$^3$ hat.

**10.** Verfahren nach Anspruch 1, worin die Mischung des Blasmittels und des polymeren Materials durch eine Düse extrudiert wird, umfassend einen Auslassbereich mit einer Querschnittsdimension, die sich in einer Abwärtsrichtung mit einem Abschrägungswinkel von weniger als 14° vermindert.

**11.** Verfahren nach Anspruch 1, worin die Verarbeitung der Mischung des Blasmittels und des polymeren Materials das Bilden einer einphasigen Lösung aus dem Blasmittel und dem polymeren Material umfasst.

**12.** Verfahren nach Anspruch 1, worin das physikalische Blasmittel, umfassend Stickstoff, in das polymere Material in dem Extruder in einer Menge von zwischen etwa 0,05 und etwa 0,9 Gew.%, bezogen auf das Gewicht des thermoplastischen Elastomers, eingeführt wird.

**13.** Verfahren nach Anspruch 1, worin der Schäumgegenstand eine Dichte zwischen 0,35 g/cm$^3$ und 0,6 g/cm$^3$ hat.

**14.** Verfahren nach Anspruch 1, worin der Schäumgegenstand eine U-Test-Wasserabsorption von weniger als etwa 0,1% hat.

**15.** Verfahren nach Anspruch 1, worin das Blasmittel ein physikalisches Blasmittel ist.

**Revendications**

**1.** Procédé comprenant :

le traitement d'un matériau polymérique comprenant un élastomère thermoplastique dans une extrudeuse ; l'introduction d'un agent gonflant comprenant de l'azote à l'intérieur du matériau polymérique dans l'extrudeuse dans une quantité inférieure à environ 1,0% en poids sur la base du poids de l'élastomère thermoplastique ; et l'extrusion d'un article alvéolaire ayant une densité d'entre 0,30 gramme/centimètre cube et 0,70 gramme/ centimètre cube et ayant :

(i) une absorption d'eau en immersion complète inférieure à 35%, ou
(ii) une absorption d'eau lors d'un essai U inférieure ou égale à 0,5%.

**2.** Procédé selon la revendication 1, dans lequel l'article alvéolaire a une absorption d'eau en immersion complète inférieure à environ 20 pour cent.

**3.** Procédé selon la revendication 1, dans lequel l'article alvéolaire a une absorption d'eau en immersion complète inférieure à environ 5 pour cent.

**4.** Procédé selon la revendication 1, dans lequel l'article alvéolaire est un matériau microcellulaire ayant une taille moyenne de cellules inférieure à environ 100 micromètres.

**5.** Procédé selon la revendication 1, dans lequel l'élastomère thermoplastique est un vulcanisat thermoplastique.

**6.** Procédé selon la revendication 1, dans lequel le matériau polymérique est essentiellement exempt d'agent gonflant chimique résiduel ou de sous-produit d'agent gonflant chimique.

**7.** Procédé selon la revendication 1, dans lequel l'article alvéolaire est un joint statique, un joint d'étanchéité, ou un profilé d'étanchéité.

**8.** Procédé selon la revendication 1, dans lequel l'article alvéolaire est exempt d'une couche auxiliaire formée sur une surface de l'article alvéolaire qui limite l'absorption d'eau.

**9.** Procédé selon la revendication 1, dans lequel l'article a une absorption d'eau en immersion complète inférieure à 35% et une densité d'entre 0,30 gramme/centimètre cube et 0,70 gramme/centimètre cube.

**10.** Procédé selon la revendication 1, dans lequel le mélange de l'agent gonflant et du matériau polymérique est extrudé à travers une filière incluant une section de sortie ayant une dimension en coupe transversale qui diminue dans une direction vers l'aval avec un angle de cône inférieur à 14 degrés.

**11.** Procédé selon la revendication 1, dans lequel le traitement du mélange de l'agent gonflant et du matériau polymérique inclut la formation d'une solution en phase unique d'agent gonflant et de matériau polymérique.

**12.** Procédé selon la revendication 1, dans lequel l'agent gonflant physique comprenant de l'azote est introduit à l'intérieur du matériau polymérique dans l'extrudeuse dans une quantité entre environ 0,05% et environ 0,9% en poids sur la base du poids de l'élastomère thermoplastique.

**13.** Procédé selon la revendication 1, dans lequel l'article alvéolaire a une densité d'entre 0,35 gramme/centimètre cube et 0,6 gramme/centimètre cube.

**14.** Procédé selon la revendication 1, dans lequel l'article alvéolaire a une absorption d'eau lors d'un essai U inférieure à environ 0,1%.

**15.** Procédé selon la revendication 1, dans lequel l'agent gonflant est un agent gonflant physique.

Fig. 1

Fig. 2

Fig. 3

Fig. 4

Fig. 5

Fig. 6

Fig. 7

50X

Fig. 9B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3796779 A, Greenberg
- US 4473665 A, Martini-Vvedensky
- US 5158986 A, Cha

- WO 9808667 A
- WO 9932544 A
- WO 0026005 A

**Non-patent literature cited in the description**

- Modem Plastics World Encyclopedia. 2001, B39-B40

- United States Patent Office Manual of Patent Examining Procedures